# EUROPÄISCHE PATENTSCHRIFT

(11) **EP 1 127 751 B1**
(45) Veröffentlichungstag und Bekanntmachung des Hinweises auf die Patenterteilung: **16.01.2008**
(21) Anmeldenummer: 01104113.4
(22) Anmeldetag: 21.02.2001
(51) Int. Cl.: B60R 21/13

(54) **Cabriolet-Fahrzeug mit einem ausfahrbaren Überrollschutz**
Convertible with a raisable roll bar
Cabriolet avec arceau de sécurité déployable

(30) Priorität: 23.02.2000 DE 20003256 U
(43) Veröffentlichungstag der Anmeldung: 29.08.2001
(73) Patentinhaber: Wilhelm Karmann GmbH, 49084 Osnabrück (DE)
(72) Erfinder: Zerull, Markus, 49084 Osnabrück (DE)
(74) Vertreter: Busse & Busse Patentanwälte

(56) Entgegenhaltungen:
- EP-A- 0 722 859
- DE-A- 4 426 733
- DE-A- 19 806 766

## Beschreibung

Die Erfindung betrifft ein Cabriolet-Fahrzeug mit einem ausfahrbaren Überrollschutz nach dem Oberbegriff des Anspruchs 1.

EP 0 722 859A beschreibt ein Cabriolet-Fahrzeug mit einem ausfahrbaren Überrollschutz gemäß dem Oberbegriff des Anspruchs 1.

Cabriolet-Fahrzeuge der genannten Art weisen beispielsweise zwei einzelne, den Fahrzeugseiten zugeordnete Bügel auf, die hinter den Rücksitzen bzw. bei zweisitzigen Cabriolet-Fahrzeugen hinter den Vordersitzen angeordnet sind und bei einem Überschlag aus einer unterhalb der Fensterbrüstungslinie gehaltenen Ruhestellung in eine Schutzstellung ausfahren. Um das Ausfahren zu ermöglichen, müssen eventuelle Abdeckungen, die die Überrollbügel bzw. einen sich quer über das Fahrzeug erstreckenden Überrollbügel in Ruhestellung abdecken, eine Freigabe der Durchtrittsöffnung für den Überrollschutz ermöglichen. Die Entfernung von beispielsweise aus leichtem Kunststoff bestehenden Abdeckungen ist durch den Antrieb zum Ausfahren des Überrollschutzes unter normalen Verhältnissen einfach möglich.

Schwierigkeiten ergeben sich, wenn bei Überschlagen des Fahrzeugs bereits eine Deformation stattgefunden hat, beispielsweise durch einen vorhergehenden Heckaufprall. Dann kann unter Umständen die Abdeckung oberhalb des Überrollschutzes derart verklemmt oder verkantet sein, daß ihre Öffnung erschwert oder verhindert ist.

Der Erfindung liegt das Problem zugrunde, auch unter solchen Umständen eine Behinderung des Ausfahrens des Überrollschutzes zu vermeiden.

Die Erfindung löst dieses Problem mit den Merkmalen des Anspruches 1. Ausgestaltungen der Erfindung sind in den Ansprüchen 2 bis 10 angegeben.

Durch die erfindungsgemäß unabhängig vom Ausfahren des Überrollschutzes ausgebildete Auslösung des oder der Abdeckteil(e) kann deren Öffnung auch bei ungünstigen Verhältnissen bewirkt werden, wenn ansonsten das Ausfahren des Überrollschutzes allein nicht mehr in der Lage wäre, die Abdeckteile zu öffnen, etwa weil diese durch einen vorherigen Heckanprall verklemmt wären.

Wenn besonders vorteilhaft die Auslösevorrichtung eine mechanische ist, kann diese allein durch die Krafteinwirkung bei einem Unfall betätigt werden, ohne daß zusätzliche Elektromotore oder dergleichen erforderlich wären.

Insbesondere wenn die Abdeckteile an ein hinteres Deckelteil anschließen und in Zusammenwirkung von den Abdeckteilen und dem Deckelteil die Auslösevorrichtung gebildet ist, ist gewährleistet, daß bei einem Heckanprall oder einem schrägen Seitenanprall in jedem Fall die Abdeckteile gelöst werden, so daß das Ausfahren des Überrollschutzes auch bei einem Überschlag im Anschluß an einen derartigen vorherigen Anprall ungehindert erfolgen kann.

Dies kann beispielsweise besonders einfach geschehen durch keilförmige Flächen, die sich bei im wesentlichen horizontaler Krafteinleitung gegeneinander derart verschieben, daß eine aushebelnde Wirkung auf das oder die Abdeckteile ausgeübt wird.

Weitere Vorteile und Einzelheiten ergeben sich aus einem in der Zeichnung dargestellten Ausführungsbeispiel des Gegenstandes der Erfindung. In der Zeichnung zeigt:

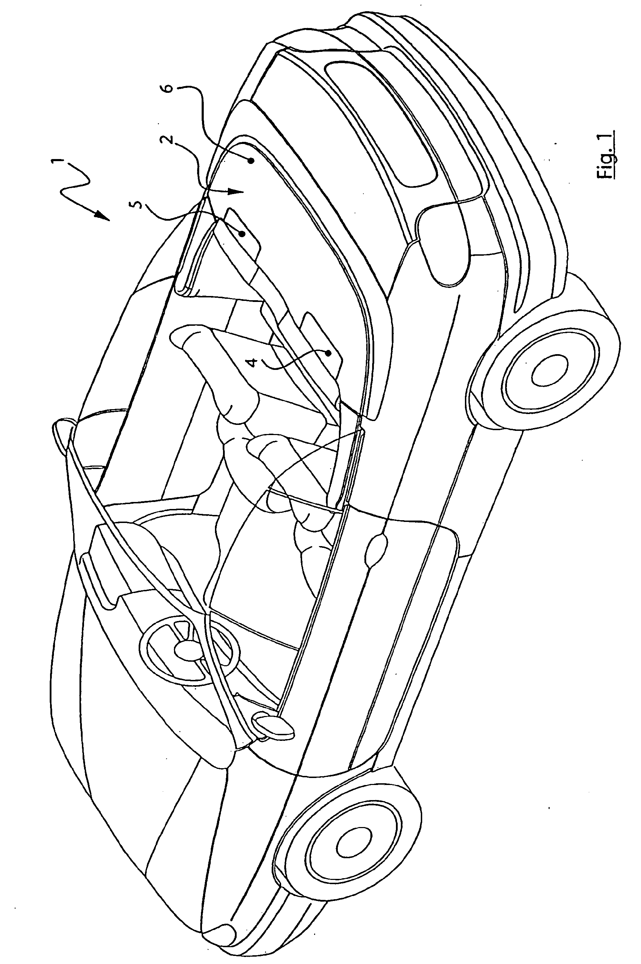

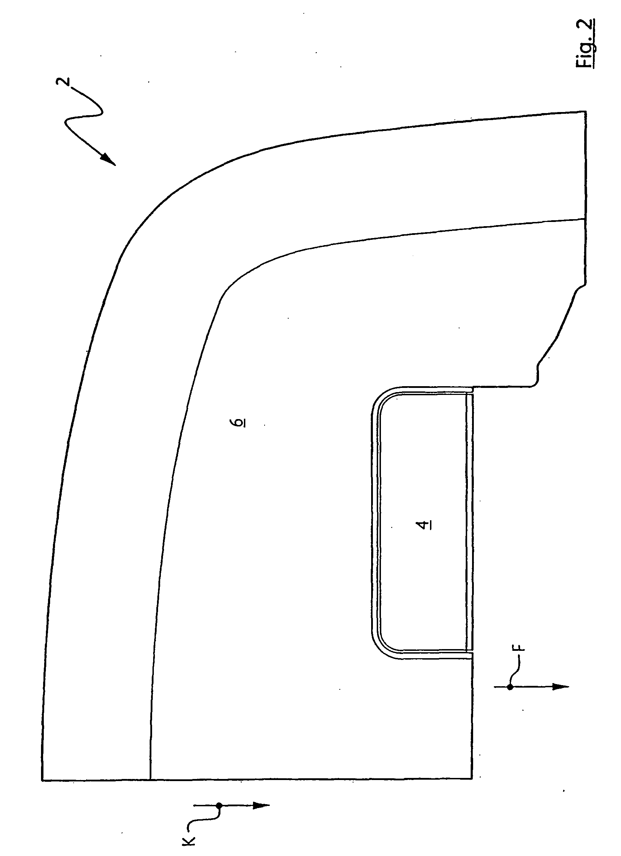

- Fig. 1: eine perspektivische Gesamtansicht eines erfindungsgemäßen Cabriolet-Fahrzeugs,

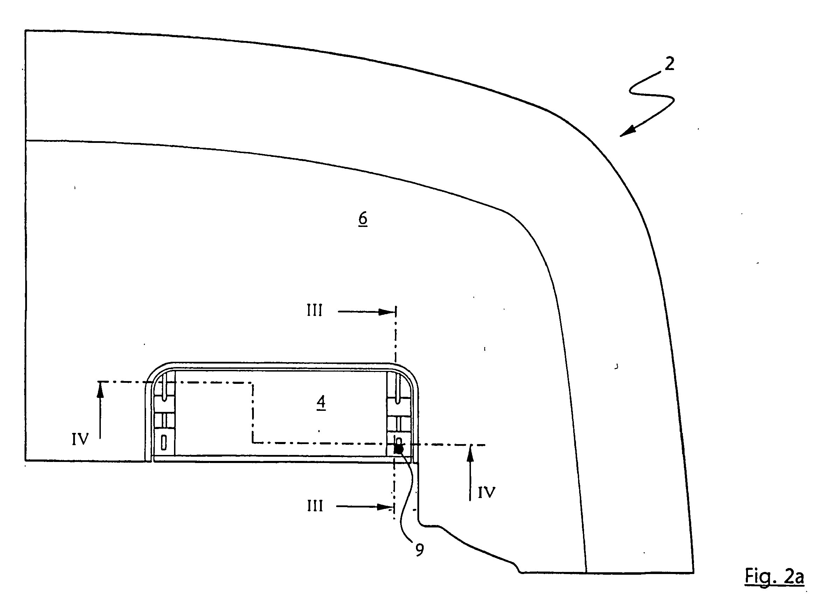

- Fig. 2: eine Draufsicht auf einen Verdeckkastendeckel mit darin integrierter Abdeckung für einen Überrollschutz,
- Fig. 2a: eine ähnliche Ansicht wie Fig. 2 mit schematisierter Durchsicht durch das Abdeckteil,

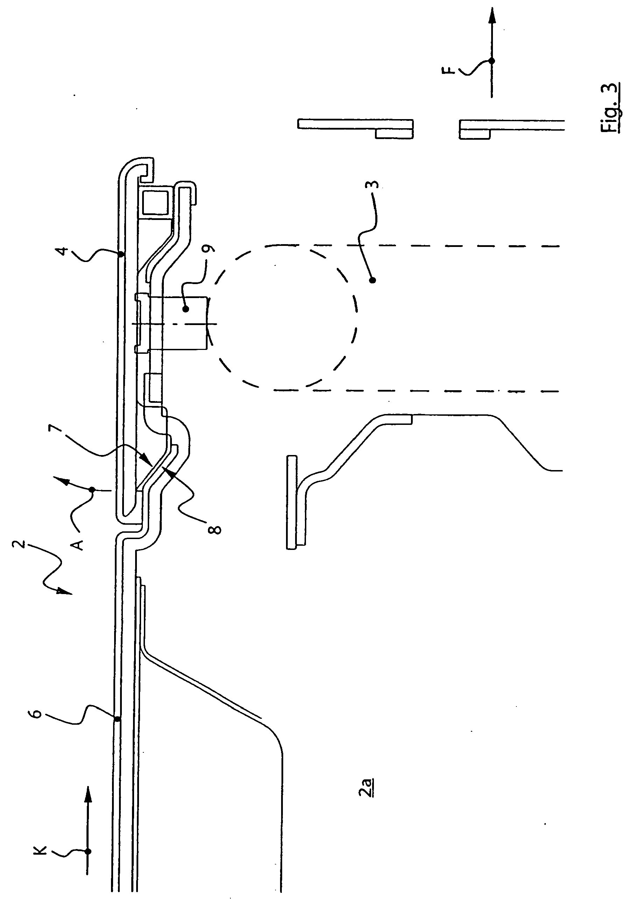

- Fig. 3: einen Schnitt entlang der Linie III-III in Fig. 2a,

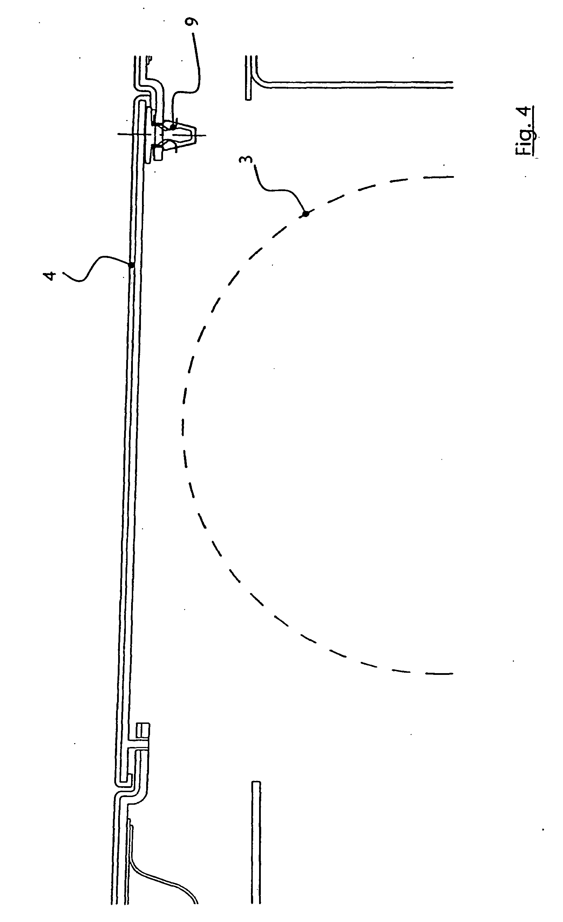

- Fig. 4: einen Schnitt entlang der Linie IV-IV in Fig. 2a.

Das im Ausführungsbeispiel dargestellte Cabriolet-Fahrzeug 1 weist ein unterhalb eines Verdeckkastendeckels 2 in einem Aufnahmeraum 2a ablegbares Verdeck auf. Hinter den Rücksitzen sind zwei einen Überrollschutz ausbildende und bei Überschlag in eine Schutzstellung ausfahrbare Bügel 3 angeordnet. Solange diese nicht benötigt werden, sind sie in eingefahrener Stellung gehalten und oberseitig jeweils von Abdeckteilen 4,5 überdeckt.

An Stelle der beiden seitlichen Bügel 3 kann auch ein über den Querverlauf des Cabriolet-Fahrzeugs 1 durchgehender Überrollschutz vorgesehen sein. Dann ist lediglich eine Abdeckung vorhanden an Stelle der gezeigten beiden Abdeckteile 4,5. Bei einem zweisitzigen Cabriolet-Fahrzeug wäre der Überrollschutz 3 hinter den Vordersitzen angeordnet.

Die Abdeckungen 4,5 sind im gezeigten Ausführungsbeispiel ein Teil des Verdeckkastendeckels 2 und mit diesem aufschwenkbar. Sie könnten auch an der Karosserie festgehalten sein und gegenüber dem Verdeckkastendeckel 2 separate Teile ausbilden.

Der Verdeckkastendeckel 2 umfaßt ein Deckelteil 6, das im wesentlichen bündig an die Abdeckteile 4,5 anschließt. Die Auslösevorrichtung 7 für die Abdeckteile 4,5 ist gebildet durch bereichsweise dem Deckelteil 6 und bereichsweise den Abdeckteilen 4 bzw. 5 zugeordnete Mittel. Diese Mittel umfassen keilförmige Flächen 7, die den Abdeckteilen 4,5 zugeordnet sind und entgegen der Fahrtrichtung F ansteigen. Dem daran anschließenden Deckelteil 6 ist eine komplementäre Keilfläche 8 zugeordnet, die in Fahrtrichtung fällt und auf der die Keilfläche 7 des Abdeckteils 4 bzw. 5 aufliegt. Bei heckseitiger Krafteinwirkung in Richtung des Pfeils K auf das Deckelteil 6 schieben sich die Keilflächen 7 und 8 gegeneinander, so daß eine aufwärts gerichtete Kraft entlang dem Pfeil A auf das Deckelteil 4 bzw. 5 ausgeübt wird. In den in Fahrtrichtung F vorgeordneten Bereichen können die Abdeckteile 4,5 über Federklammern 9 gehalten sein, die bei entsprechender Aufwärtskraft in Richtung des Pfeils A aus ihrer eingerasteten Stellung lösbar sind, so daß das Abdeckteil 4,5 insgesamt gelöst wird. Findet etwa zunächst ein Heckanprall und anschließend ein Überschlag des Fahrzeugs statt, ist ein Verklemmen der Abdeckteile 4,5 somit verhindert. Der Durchtrittsweg für den ausfahrenden Überrollschutz 3 ist frei.

Im einzelnen würde bei einem Heckanprall der Verdeckkastendeckel 2 insgesamt eine in Fahrtrichtung F gerichtete Krafteinwirkung K erfahren, die im Sinne einer Vorwärtsverlagerung des Verdeckkastendeckels 2 auf diesen einwirkt. Die Abdeckteile 4,5 werden dabei gegen ein vorderes Widerlager, beispielsweise die Halterung für Kopfstützen, gedrückt, wodurch sich die Relativbewegung zwischen dem Abdeckteil 4,5 und dem bündig daran heckseitig anschließenden Deckelteil 6 ergibt. Bei karosserieseitig gehaltenen Abdeckteilen 4,5 ergibt sich die Relativbewegung schon aus ihrer gegenüber der Karosserie starren Halterung. Durch die Relativbewegung zwischen dem Deckelteil 6 und den Abdeckteilen 4,5 werden die Keilflächen 7,8 gegeneinander verschoben, so daß die aufwärts gerichtete Kraft A auf die Keilfläche 7 des Abdeckteils 4,5 resultiert.

Derartige Abdeckteile 4,5 können beispielsweise aus Kunststoff gefertigt sein. Gleiches gilt auch für die Deckelteile 6. Auch Metalle kommen für derartige Zwecke in Betracht.

## Patentansprüche

1. Cabriolet-Fahrzeug (1) mit einem ausfahrbaren Überrollschutz (3), der in eingefahrener Stellung zumindest bereichsweise von einem oder mehreren Abdeckteilen (4;5) oberseitig überdeckt ist, **dadurch gekennzeichnet, daß** dem oder den Abdeckteil(en) (4;5) zu ihrer Öffnung bei einem Unfall eine unabhängig vom Ausfahren des Überrollschutzes (3) bei einem Unfall wirksame Auslösevorrichtung (7;8) zugeordnet ist.

2. Cabriolet-Fahrzeug nach Anspruch 1, **dadurch gekennzeichnet, daß** die Auslösevorrichtung (7;8) eine mechanische ist.

3. Cabriolet-Fahrzeug nach einem der Ansprüche 1 oder 2, **dadurch gekennzeichnet, daß** das oder die Abdeckteil(e) (4;5) im wesentlichen bündig an ein hinteres Deckelteil (6) anschließen und die mechanische Auslösevorrichtung (7;8) im Zusammenwirken von den Abdeckteilen (4;5) und dem Deckelteil (6) gebildet sind.

4. Cabriolet-Fahrzeug nach Anspruch 3, **dadurch gekennzeichnet, daß** das Deckelteil (6) einen Verdeckkastendeckel (2) zur Abdeckung eines Aufnahmeraums (2a) für das geöffnete Dach bildet.

5. Cabriolet-Fahrzeug nach Anspruch 3, **dadurch gekennzeichnet, daß** die Abdeckteile (4;5) und das Deckelteil (6) gemeinsam einen Verdeckkastendeckel (2) ausbilden.

6. Cabriolet-Fahrzeug nach einem der Ansprüche 1 bis 5, **dadurch gekennzeichnet, daß** dem oder den Abdeckteil(en) (4;5) rückwärtig keilförmige, sich entgegen der Fahrtrichtung verjüngende Randbereiche (7) zugeordnet sind und das anschließende Deckelteil komplementäre, in Fahrtrichtung abfallende Schrägflächen (8) aufweist.

7. Cabriolet-Fahrzeug nach Anspruch 6, **dadurch gekennzeichnet, daß** die Schrägflächen (7) des Abdeckteils (4;5) oder der Abdeckteile mit denen (8) des Deckelteils (6) bei heckseitiger Krafteinwirkung zusammenschiebbar sind und eine resultierende aufwärtsgerichtete Kraft (A) auf das oder die Abdeckteil(e) (4;5) bewirken.

8. Cabriolet-Fahrzeug nach Anspruch 7, **dadurch gekennzeichnet, daß** das oder die Abdeckteil(e) (4;5) in ihrem vorderen, der Keilfläche (7) abgewandten Bereich über Federklammern (9) gehalten sind.

9. Cabriolet-Fahrzeug nach Anspruch 8, **dadurch gekennzeichnet, daß** die Federklammern (9) bei heckseitiger Krafteinleitung lösbar sind.

10. Cabriolet-Fahrzeug nach einem der Ansprüche 1 bis 9, **dadurch gekennzeichnet, daß** zwei Überrollbügel (3) vorgesehen sind, die jeweils von einer in Draufsicht im wesentlichen rechteckigen Abdeckplatte (4;5) überdeckt sind.

## Claims

1. Convertible vehicle (1) having an extendable means of rollover protection (3) which, in the retracted position, is covered at the top in at least a region or regions by one or more cover members (4, 5), **characterised in that**, to open them in the event of an accident, the cover member or members (4, 5) have associated with them a triggering arrangement (7, 8) which acts, in the event of an accident, independently of the extending of the means of rollover protection (3).

2. Convertible vehicle according to claim 1, **characterised in that** the triggering arrangement (7, 8) is a mechanical one.

3. Convertible vehicle according to either of claims 1 and 2, **characterised in that** the cover member or members (4, 5) continue on from a rear lid member (6) substantially flush therewith, and the mechanical triggering arrangement (7, 8) is formed at the interaction of the cover members (4, 5) and the lid member (6).

4. Convertible vehicle according to claim 3, **characterised in that** the lid member (6) forms a folding-top compartment lid (2) to cover a space (2a) to receive the lowered roof.

5. Convertible vehicle according to claim 3, **characterised in that** the cover members (4, 5) and the lid member (6) together form a folding-top compartment lid (2).

6. Convertible vehicle according to one of claims 1 to 5, **characterised in that** the cover member or members (4, 5) are given rear, wedge-shaped edge regions (7) which taper in the direction opposite from the direction of travel, and the lid member which continues on has complementary inclined faces (8) which slope down in the direction of travel.

7. Convertible vehicle according to claim 6, **characterised in that** the inclined faces (7) of the cover member or members (4, 5) can be slid together with those (8) of the lid member (6) when force is applied at the rear and produce a resultant upwardly directed force (A) on the cover member or members (4, 5).

8. Convertible vehicle according to claim 7, **characterised in that** the cover member or members (4, 5) are held by spring clips (9) in their front region remote from the wedge-shaped face (7).

9. Convertible vehicle according to claim 8, **characterised in that** the spring clips (9) are able to release when force is applied at the rear.

10. Convertible vehicle according to one of claims 1 to 9, **characterised in that** two rollover bars (3) are provided which are each covered by a cover plate (4, 5) which is substantially rectangular when seen in plan.

## Revendications

1. Cabriolet (1) comportant un arceau de protection déployable (3), et qui, en position rétractée, est couvert sur le dessus, au moins en partie, par un ou plusieurs caches (4, 5),
**caractérisé en ce qu'**
en cas d'accident, un dispositif de déclenchement (7, 8) agissant indépendamment du déploiement de l'arceau de protection (3) est associé à un ou aux caches (4, 5).

2. Cabriolet selon la revendication 1,
**caractérisé en ce que**
le dispositif de déclenchement (7, 8) est un dispositif mécanique.

3. Cabriolet selon l'une des revendications 1 ou 2,
**caractérisé en ce que**
le ou les caches (4, 5) rejoignent pratiquement à niveau, une partie de capot arrière (6) et le dispositif de déclenchement mécanique (7, 8) est formé en coopération avec les caches (4, 5) et la partie de coffre (6).

4. Cabriolet selon la revendication 3,
**caractérisé en ce que**
la partie de coffre (6) est un couvercle de logement de capote (2) pour couvrir le logement (2a) du toit ouvert.

5. Cabriolet selon la revendication 3,
**caractérisé en ce que**
les caches (4, 5) et la partie de couvercle (6) forment en commun un couvercle de logement de capote (2).

6. Cabriolet selon l'une des revendications 1 à 5,
**caractérisé en ce que**
des zones de bord (7) allant en se rétrécissant dans la direction opposée à la direction de déplacement, ayant à l'arrière une forme de coin, sont associées aux caches (4, 5), et la partie de coffre adjacente présente des surfaces inclinées (8) descendant dans la direction de circulation et qui sont complémentaires.

7. Cabriolet selon la revendication 6,
**caractérisé en ce que**
les surfaces inclinées (7) de la partie de cache (4, 5) ou des parties de cache, peuvent se regrouper par coulissement en exerçant une force du côté arrière, avec les parties (8) du coffre (6) et produire une force (A) résultante, dirigée vers le haut, s'exerçant sur le ou les caches (4, 5).

8. Cabriolet selon la revendication 7,
**caractérisé en ce que**
le ou les caches (4, 5) sont tenus dans leur zone avant, à l'opposé de la surface en forme de coin, (7) par des agrafes élastiques (9).

9. Cabriolet selon la revendication 8,
**caractérisé en ce que**
les agrafes élastiques (9) sont déclenchées par une force appliquée par le côté arrière.

10. Cabriolet selon l'une des revendications 1 à 9,
**caractérisé par**
deux arceaux de protection (3) qui en vue de dessus, sont couverts pratiquement par les caches rectangulaires (4, 5).
